# FASCICULE DE BREVET EUROPEEN

(11) **EP 2 938 510 B1**
(45) Date de publication et mention de la délivrance du brevet: **07.08.2019**
(21) Numéro de dépôt: 13824595.6
(22) Date de dépôt: 20.12.2013
(51) Int. Cl.: B60K 35/00, B60R 11/02, G06F 1/16

(54) **DISPOSITIF D'AFFICHAGE POUR VÉHICULE AUTOMOBILE**
ANZEIGEVORRICHTUNG FÜR EIN MOTORFAHRZEUG
MOTOR VEHICLE DISPLAY DEVICE

(30) Priorité: 27.12.2012 FR 1262859
(43) Date de publication de la demande: 04.11.2015
(73) Titulaire: Valeo Systemes Thermiques, 78320 Le Mesnil-Saint-Denis Cedex (FR)
(72) Inventeur: LEKMINE, Djamel, F-78320 Le Mesnil Saint Denis (FR)
(74) Mandataire: Pothmann, Karsten
(86) Numéro de dépôt international: PCT/FR2013/000361
(87) Numéro de publication internationale: WO 2014/102467

(56) Documents cités:
- US-A1- 2008 130 212
- US-A1- 2012 120 568
- US-A1- 2012 162 950

## Description

La présente invention concerne un dispositif d'affichage pour véhicule automobile.

Un tel dispositif trouve une application avantageuse pour les tableaux de commande et d'affichage de véhicule automobile.

La présence de dispositifs d'affichage dans des véhicules automobiles, notamment comprenant des écrans plats est de plus en plus répandus.

Ces dispositifs d'affichage peuvent d'ailleurs comporter seulement l'écran plat ou encore, associée à cet écran plat, une dalle tactile de commande par exemple capacitive ou résistive. Dans ce dernier cas, la dalle tactile permet de déterminer les coordonnées de l'appui d'un doigt d'utilisateur. Les appuis sont ensuite traités par une unité de traitement comportant par exemple un microprocesseur pour commander différentes fonctions du véhicule, comme par exemple des fonctions de climatisation, d'un système audio, d'un système de téléphonie, d'un système multimédia ou encore d'un système de navigation.

On connaît des dispositifs d'affichage intégrés au tableau de commande et d'affichage dans lesquels un cadre est disposé tout autour du dispositif d'affichage, cachant les bords de l'écran plat et, le cas échéant la dalle tactile, en formant une bordure en relief, généralement en retrait, délimitant une cavité entre le dispositif d'affichage et le cadre. L'écran d'affichage apparaît alors en retrait de la bordure du cadre. Un tel dispositif comprenant les caractéristiques du préambule de la revendication 1 est divulgué par le document US2008/0130212.

Pour des raisons de style, il est de plus en plus demandé à ce que la surface du dispositif d'affichage en vis-à-vis d'un utilisateur affleure la surface de la façade du tableau de commande et d'affichage. On parle également d'un afficheur « flushy », mot anglais pour désigner que la surface du dispositif d'affichage est en alignement avec la façade. Ainsi, lorsque l'on passe un doigt sur le dispositif d'affichage puis sur la façade, la différence de niveau entre la surface de la façade et celle du dispositif d'affichage doit être telle que l'on ne sent pas ou à peine le changement de surface (bien entendu sous condition que les deux surfaces présentent une rugosité semblable). Cette différence de niveau a été quantifiée à 0,2, voire 0,15mm.

Ce souhait de style pose un certain nombre de problèmes techniques en particulier au niveau des jeux des divers éléments assemblés ensemble.

De plus, on constate que les écrans plats sont maintenus dans un cadre de support présentant à l'arrière des pieds de fixation. Ces pieds de fixation se vissent directement sur un boîtier de fixation qui est lui-même fixé à l'arrière d'une face interne de la façade au niveau d'une ouverture de façade.

Au vu de la dispersion des dimensions mécaniques des pièces et des tolérances de fabrication, en particulier du boîtier de fixation généralement réalisé en matière plastique, la position exacte de la surface de l'écran plat par rapport à un référentiel de la façade est mal maîtrisée.

La présente invention vise à pallier au moins partiellement certains des problèmes ci-dessus en proposant un dispositif d'affichage permettant de s'affranchir des problèmes de positionnement dus aux tolérances de fabrication des éléments du dispositif d'affichage et aux tolérances d'assemblage.

A cet effet, la présente invention a pour objet un dispositif d'affichage pour véhicule automobile pour une façade d'habitacle comportant
- d'une part un module d'affichage comprenant
   - un écran plat, et
   - un cadre de support dudit écran plat, et
   - d'autre part un boîtier de fixation par l'arrière du module d'affichage contre une butée de référence au niveau d'une zone d'affichage de la façade,
   caractérisé en ce que le cadre de support de l'écran plat est fixé sur le fond du boîtier de fixation par l'intermédiaire d'éléments de liaison qui sont chacun en appui d'une part contre le boitier de fixation et d'autre part contre le cadre de support pour un rattrapage de jeu au moins partiel par l'arrière

En utilisant des éléments de liaison qui sont chacun en appui d'une part contre le boitier de fixation et d'autre part contre le cadre de support pour maintenir le module en appui contre la butée de référence de la façade, on peut rattraper les jeux mécaniques dus à aux tolérances de fabrication des divers pièces mécaniques et rapprocher l'écran au plus près ou contre le référentiel de la façade.

Selon l'invention, les éléments de liaisons comprennent des éléments élastiques comprimés pour maintenir le module d'affichage en appui contre la butée de référence de la façade.

Etant donné que les éléments élastiques sont comprimés, ces derniers tendent à écarter le fond du boitier de support du cadre de support de l'écran induisant un rattrapage automatique des jeux mécaniques.

Le dispositif d'affichage peut présenter une ou plusieurs des caractéristiques suivantes prises seule ou en combinaison.

Selon un autre aspect, le cadre de support présente des pieds de fixation par vissage et chaque élément de liaison est maintenu par une vis en prise avec un pied de fixation.

Ainsi, on prend appui sur la configuration existante des écrans plats sans devoir modifier leur mode de fixation. Selon encore un autre aspect, l'élément de liaison comprend un manchon en élastomère entourant un pied de fixation, ce qui permet de bien isoler phoniquement les pieds de fixation du fond du boîtier de fixation.

Plus en détail, on peut prévoir que le boitier de fixation comprend pour chaque élément de liaison un renfoncement tronconique présentant une ouverture à l'arrière pour un passage d'une vis et/ou d'un outil de vissage, et que le manchon en élastomère présente
- une partie tronconique en appui contre le renfoncement tronconique et
- une partie cylindrique entourant un pied de fixation, et
et que la vis possède une tête de vissage appuyant contre la partie tronconique du manchon en élastomère pour exercer une force de compression sur ce manchon en élastomère de sorte que la partie cylindrique du manchon en élastomère exerce une poussée contre le cadre de support tout en maintenant la partie cylindrique du manchon en appui par frottement contre le renfoncement tronconique, maintenant ainsi le module d'affichage en appui contre la façade.

La compression a donc pour effet de pousser le manchon en élastomère d'une part contre le renfoncement tronconique du boîtier de fixation et d'autre part le module contre la façade de façon à le serrer. Le module est ainsi bien fixé et le manchon en élastomère amorti les vibrations et les effets de caisse de résonnance du boîtier. La poussée contre le renfoncement tronconique, donc perpendiculaire à l'axe de la vis a également pour effet de former un frein contre le dévissage.

On peut prévoir en outre que le dispositif d'affichage comporte une rondelle interposée entre la tête de vis et la partie tronconique du manchon en élastomère et prolongée par une portion cylindrique formant butée de vissage.

On limite ainsi la course de vissage grâce à la portion cylindrique, ce qui permet d'ajuster très précisément les forces d'appui entre le cadre de support de l'écran d'une part et le fond du boitier de fixation d'autre part. Aussi, l'opération de vissage pour un monteur est facilitée.

Il s'avère astucieux que chaque pied de fixation pénètre partiellement dans le renfoncement tronconique qui de fait assure en même temps une fonction d'autocentrage de l'écran par rapport au fond du boitier de fixation.

Lorsque la zone d'affichage est formée par une ouverture de façade ménagée dans la façade, on prévoit que le module d'affichage comprend en outre un sous-module présentant une plaque de comblement en matériau transparent présentant sensiblement les dimensions de l'ouverture ménagée dans la façade, le sous-module étant fixé par collage contre le bord périphérique du cadre de support destiné à être poussé en direction de la butée de référence de la façade, l'épaisseur de ladite plaque de comblement étant choisie de manière que la plaque de comblement affleure la face de façade destinée à être vue par un utilisateur avec un jeu inférieur à 0,2mm.

On obtient ainsi un dispositif d'affichage à fleur (« flushy » en anglais) par rapport à la surface de la façade et donc un effet esthétique positif. Il en résulte de plus que l'on peut diminuer l'épaisseur de la lame d'air, ce qui permet de diminuer les effets de réfraction et augmenter la qualité d'image, en particulier lorsque l'on regarde en biais, ce qui est généralement le cas aussi bien pour le conducteur que pour le passager lorsque le dispositif d'affichage est installé au niveau central d'un tableau de commande et d'affichage.

En prévoyant que le sous-module comprend en outre une dalle tactile collée contre la face de la plaque de comblement opposée à celle destinée à être en vis-à-vis d'un utilisateur on ajoute la fonctionnalité de commande au dispositif d'affichage.

Du fait que la dalle tactile est collée contre la plaque de comblement et le sous-module est collé sur le cadre de support de l'écran plat, on obtient un empilement bien aligné et une meilleure correspondance entre les affichages de l'écran plat représentant des champs de commande d'une part et les zones de commandes de la dalle tactile d'autre part.

A titre d'exemple la plaque de comblement possède une épaisseur comprise entre 1,6 et 2mm et peut être est en verre ou en polycarbonate cristal avec une teinte cristal ou fumé selon les aspects recherchés par rapport à la façade.

La dalle tactile possède par exemple une épaisseur comprise entre 1,0 et 1,4 mm, de préférence 1,2mm.

Le sous-module est ainsi peu encombrant.

Pour augmenter la qualité optique d'affichage, le sous-module comprend en outre un film polariseur collé sur la face de la plaque de comblement destinée à être en vis-à-vis d'un utilisateur.

Afin de bien centrer le dispositif d'affichage par rapport à la façade, on prévoit un joint de centrage réalisé en un matériau élastomère thermoplastique polyester.

Ce type de matériau présente l'avantage de la souplesse des caoutchoucs, la résistance des plastiques et facilité de mise en oeuvre des thermoplastiques. La mise en place est en outre plus facile qu'un joint en silicone par exemple.

Selon un aspect le joint de centrage présente en coupe transversale un profil en L dont une branche est en contact contre le bord de la plaque de comblement et dont l'autre branche est interposée entre la butée de référence de la façade et le sous-module ce qui permet d'assurer une très bonne étanchéité.

Selon un autre aspect le joint de centrage est rectifié, c'est-à-dire que ses dimensions ont été ajustées avec précision, augmentant ainsi la précision de positionnement du dispositif d'affichage.

La présente invention concerne également un tableau de commande et d'affichage de véhicule automobile, caractérisé en ce qu'il comprend un dispositif d'affichage tel que décrit ci-dessus.

En outre la présente invention concerne un procédé d'assemblage d'un dispositif d'affichage tel que défini ci-dessus, caractérisé en ce que
- on fixe le boîtier de fixation par l'arrière contre la façade et
- on met les éléments de liaison en appui d'une part contre le boitier de fixation et d'autre part contre le cadre de support pour un rattrapage de jeu au moins partiel par l'arrière.
   On constate que l'assemblage est très simple et permet de rattraper de manière simple les jeux mécaniques.

Selon une variante, on fixe au préalable le sous-module par collage contre la butée de référence ce qui peut être réalisé très facilement, en particulier si on place auparavant le joint de centrage soit dans l'ouverture de façade ou autour du sous-module.

Selon une autre variante, on fixe au préalable le module d'affichage par collage contre la butée de référence. Ceci a pour avantage que le module d'affichage a été assemblé auparavant de sorte que, en fonction des éléments présents du sous-module, la plaque de comblement, la dalle tactile et l'écran d'affichage sont très précisément positionnés les uns par rapport aux autres.

Selon le mode de réalisation, en particulier avec les manchons élastiques, on prévoit de serrer ensuite les vis de sorte que chaque tête de vissage appuie contre la partie tronconique du manchon en élastomère pour exercer une force de compression sur ce manchon en élastomère de façon que la partie cylindrique du manchon en élastomère exerce une poussée axiale contre le cadre de support tout en maintenant la partie cylindrique du manchon en appui par frottement par une poussée transversale contre le renfoncement tronconique, maintenant ainsi le module d'affichage en appui contre la façade.

Par une simple opération de vissage maîtrisé, on fixe le module d'affichage avec ses éléments tout en rattrapant les jeux mécaniques.

D'autres caractéristiques et avantages de l'invention ressortiront de la description suivante, donnée à titre d'exemple, sans caractère limitatif, en regard des dessins annexés sur lesquels :
- la figure 1 montre une vue en perspective éclatée depuis l'arrière d'un dispositif d'affichage selon l'invention,
- la figure 2 montre une vue agrandie en coupe transversale au niveau d'un élément de liaison,
- la figure 3 montre une vue en coupe d'une partie d'un élément de liaison selon l'invention,
- la figure 4 montre une vue en perspective éclatée depuis l'avant d'un module d'affichage d'un dispositif d'affichage selon l'invention,
- la figure 5 montre une vue en coupe transversale d'un détail du module d'affichage,
- la figure 6 montre le module d'affichage avec un anneau de centrage,
- la figure 7 montre selon une vue en coupe transversale le dispositif d'affichage selon l'invention équipé d'un anneau de centrage.
- les figures 8A et 8B montrent des vues en coupe transversale de deux étapes d'un procédé d'assemblage d'un dispositif d'affichage selon l'invention selon un premier mode de réalisation,
- les figures 9A et 9B montrent des vues en coupe transversale de deux étapes d'un procédé d'assemblage d'un dispositif d'affichage selon l'invention selon un second mode de réalisation, et
- la figure 10 montre une vue en coupe transversale d'un autre exemple de réalisation d'un élément de liaison.

Sur ces figures, les éléments identiques portent les mêmes numéros de référence.

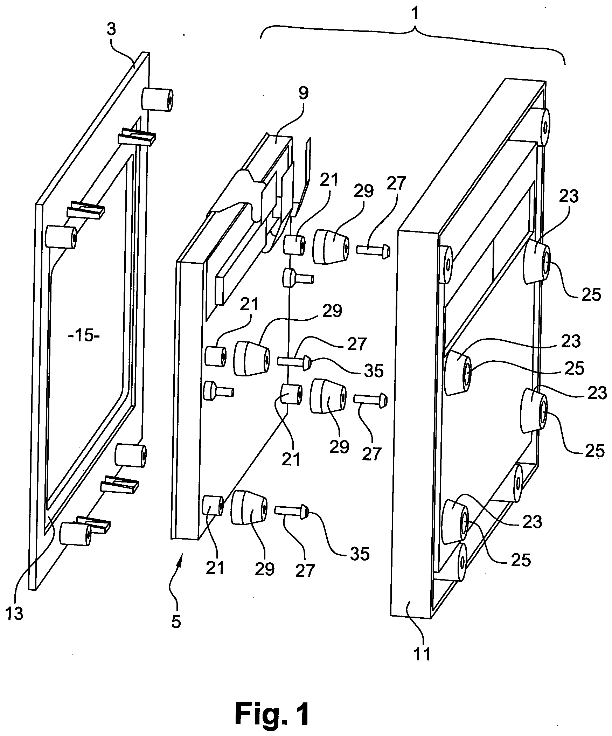

Sur la figure 1 est représentée une vue en perspective éclatée depuis l'arrière d'un dispositif d'affichage 1 selon l'invention. Ce dispositif d'affichage trouve une utilisation particulièrement avantageuse dans un habitacle de véhicule automobile, en particulier pour être intégré dans un tableau de commande et d'affichage, dont seul un élément de façade 3 est représenté.

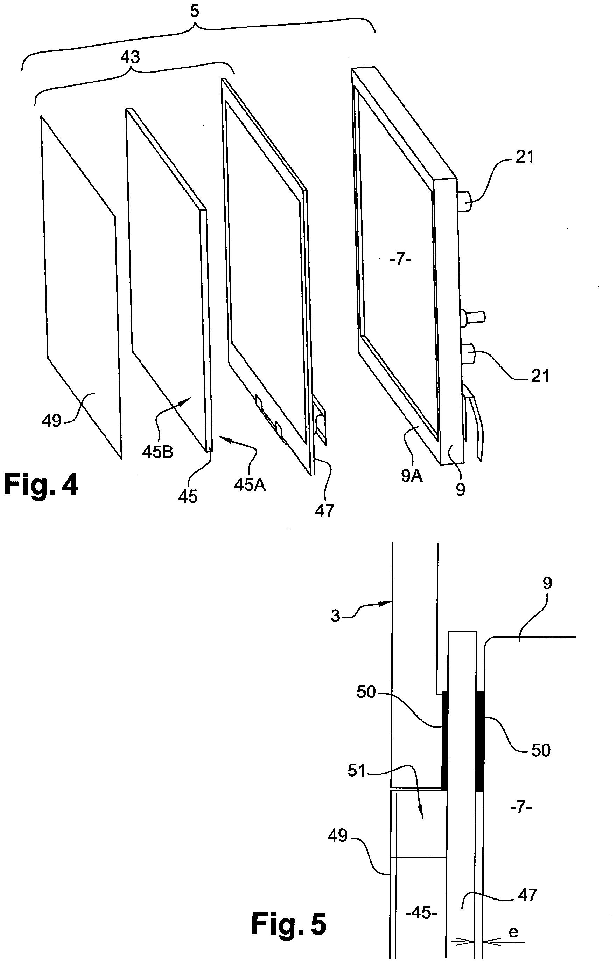

Plus particulièrement, le dispositif d'affichage 1 comprend un module d'affichage 5 comportant d'une part un écran plat 7, par exemple un écran TFT, un écran LCD, LED ou OLED (voir figure 4) et un cadre de support 9 dudit écran plat.

D'autre part, le dispositif d'affichage 1 comprend un boîtier 11 de fixation par l'arrière du module d'affichage 5 contre une butée de référence 13 de la façade 3 au niveau d'une zone d'affichage 15 (fig. 1). La butée de référence peut par exemple être la face interne de la façade 3. La zone d'affichage peut être matérialisée par une ouverture de façade ou une fenêtre pleine insérée dans la façade 3.

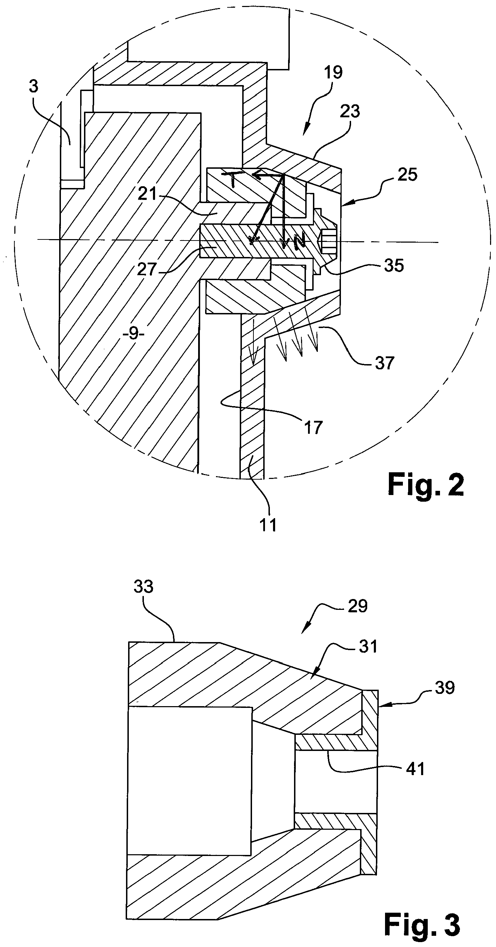

Le cadre de support 9 de l'écran plat 7 est fixé sur le fond 17 (voir figure 2) du boîtier de fixation 11 par l'intermédiaire d'éléments de liaison 19. Ces éléments de liaisons 19 sont chacun en appui d'une part contre le boitier de fixation 11 et d'autre part contre le cadre de support 9.

Selon le présent mode de réalisation, ces éléments de liaisons sont réalisés sous forme d'éléments élastiques comprimés 19 pour maintenir le module d'affichage 5 en appui contre la butée de référence 13 de la façade 3.

Ainsi, comme les écrans plats 7 présentent toujours à l'arrière des pieds de fixation 21, on peut compenser tout jeu de fabrication afin que l'écran plat 7 soit au plus près de la zone d'affichage 15, qui est ici une ouverture, et de la façade 3, ce qui n'était pas possible selon l'art antérieur étant donné que l'écran était simplement vissé à l'arrière du fond de boîtier ce qui rendait tout rattrapage de jeu par l'arrière impossible.

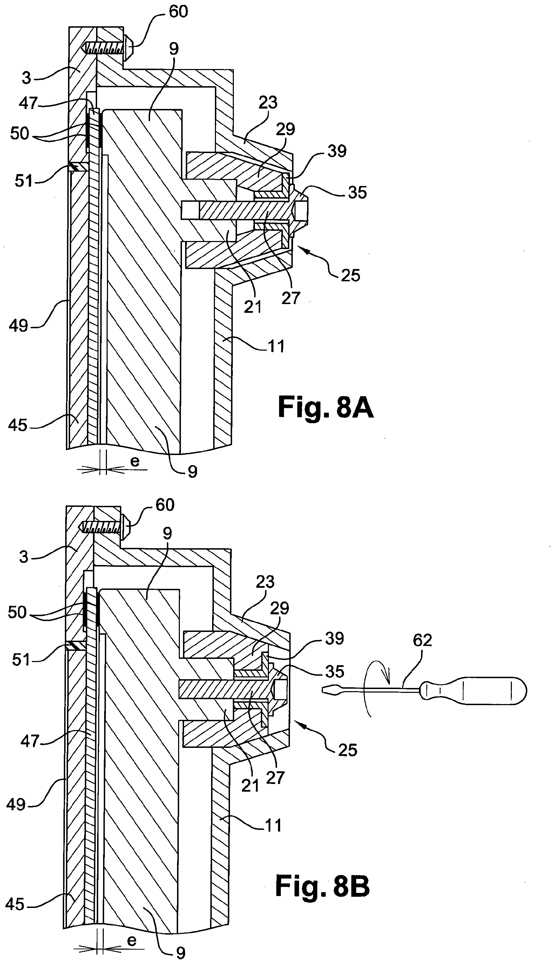

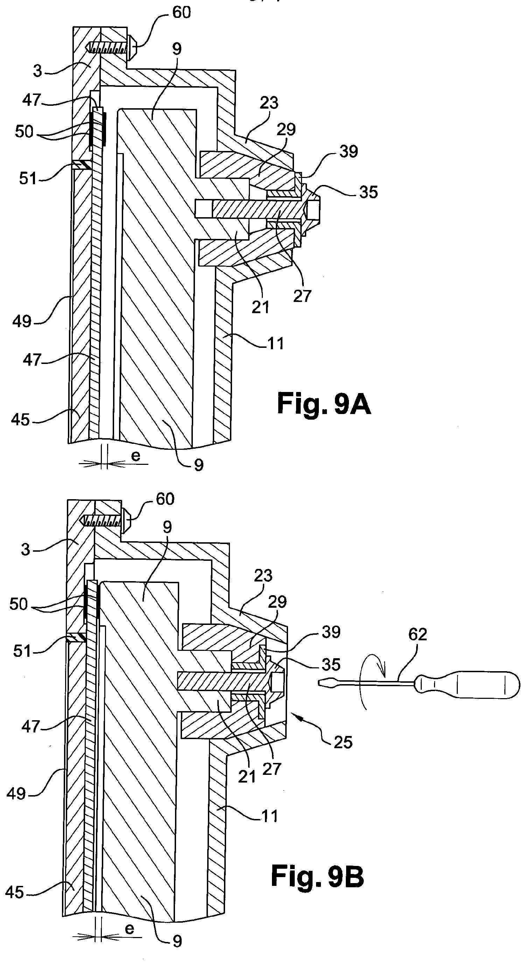

Plus en détail, le boitier de fixation 11 comprend pour chaque élément de liaison 19 un renfoncement tronconique 23 bien visible sur les figures 1 à 3, avec une ouverture 25 à l'arrière pour un passage d'une vis 27 ou d'un outil de vissage (par exemple un tournevis 62 - voir figures 8B et 9B).

Chaque élément de liaison 19 comprend un manchon en élastomère 29 présentant une partie tronconique 31 (voir aussi figure 3) en appui contre le renfoncement tronconique 23 (voir figure 2) et une partie cylindrique 33 entourant un pied de fixation 21.

Comme on le voit sur les figures 1 et 2, la vis 27 qui présente une tête de vissage 35, est en prise avec un pied de fixation 21.

Comme cela est visible sur la figure 2, la tête de vis 35 appui contre la partie tronconique 31 du manchon en élastomère 29 pour exercer une force de compression sur ce manchon en élastomère 29 de sorte que la partie cylindrique 33 du manchon en élastomère 29 exerce une poussée contre le cadre de support 11 tout en maintenant la partie tronconique 31 du manchon 29 en appui par frottement contre les parois des renfoncements tronconiques 23 (voir flèches 37 de la figure 2) maintenant ainsi le module d'affichage 5 en appui contre la façade 3.

On comprend donc que lorsque l'on visse la vis 27, on comprime le manchon en élastomère 29, ce qui a pour conséquence une extension radiale. Toutefois, cette extension radiale est contrée par les parois tronconiques des renfoncements 23 qui transforment cette extension radiale en mouvement de translation de la partie cylindrique 33 en direction du cadre de support 9, ce qui permet un rattrapage de jeu par l'arrière simple et efficace.

En outre, une rondelle 39 est interposée entre la tête de vis 35 et la partie tronconique 31 du manchon en élastomère 29 (fig. 3). Cette rondelle 39 est prolongée par une portion cylindrique 41 qui rentre dans la partie tronconique 31 du manchon 29 et forme une butée de vissage ou limiteur de course pour la vis 27. De la sorte, on peut lors du montage automatique utiliser une visseuse électrique sans risquer d'abimer les divers éléments. En particulier, la longueur de la partie cylindrique 41 de la rondelle 39 permet de calibrer la force d'appui ou force de poussée contre le cadre de support 5. Le module d'affichage 5 peut être immobilisé sans hyper-statisme et sans création de contraintes supplémentaires. En choisissant la dureté / élasticité de l'élastomère du manchon 29, on peut moduler en fonction des besoins la relation entre le chemin parcouru par la vis pendant le vissage d'une part et l'avancé de la partie cylindrique 41 du manchon en élastomère 29 provoquée par le vissage.

Comme on le voit sur la figure 2, chaque pied de fixation 21 pénètre partiellement dans le renfoncement tronconique 25, ce qui assure un centrage automatique du module d'affichage 5 et une meilleure tenue.

On se tourne maintenant plus en détail vers le module d'affichage 5.

En effet, comme on le voit sur la figure 4, outre l'écran 7 et le cadre de support 9, il peut comprendre un sous-module 43 présentant une plaque de comblement 45.

Cette plaque de comblement 45 est réalisée en matériau transparent, comme par exemple en verre ou en polycarbonate, par exemple teinté, fumé ou cristal, et présente sensiblement les dimensions de l'ouverture 15 ménagée dans la façade 3.

De plus, le sous-module 43 comprend une dalle tactile 47 collée, par exemple par une colle optique contre la face 45A de la plaque de comblement 45 opposée à celle destinée à être en vis-à-vis d'un utilisateur.

Enfin, un film polariseur 49 est collé sur la face 45B de la plaque de comblement 45 destinée à être en vis-à-vis d'un utilisateur.

Le sous-module 43 est fixé par collage, par exemple un adhésif double face, contre le bord périphérique 9A du cadre de support 9 destiné à être poussé en direction de la butée de référence 13 de la façade 3. Ainsi, on peut obtenir une précision de placement entre la dalle tactile 47 d'une part et l'écran plat 7 d'autre part inférieure ou égale à 0,3mm. On peut ainsi obtenir une bonne correspondance entre les informations de commandes affichées par l'écran plat 7 d'une part et les champs de commandes de la dalle tactile 47 d'autre part. Cette excellente précision ne pouvait pas être obtenue dans l'état de la technique dû aux tolérances de fabrication et du fait que la dalle tactile était supportée par la façade et l'écran plat par le fond du boîtier. De plus, le collage du sous-module 43 sur le bord périphérique 9A du cadre de support 9 crée un module d'affichage 9 facile à monter dans un tableau de commande et d'affichage.

L'épaisseur de la plaque de comblement 45 est choisie de manière que la plaque de comblement avec le film polariseur 49 affleure la face de façade 3 destinée à être vue par un utilisateur avec un jeu inférieur à 0,2 mm, typiquement de 0,15mm (voir figure 5).

A titre d'exemple, la plaque de comblement 45 possède une épaisseur comprise entre 1,6 et 2mm et la dalle tactile possède une épaisseur comprise entre 1,0 et 1,4 mm, de préférence 1,2mm.

Bien entendu, des variantes plus simples sont envisageables, par exemple avec un sous-module 43 formé seulement de la plaque de comblement 45 pour un afficheur simple, avec ou sans film polariseur 49.

Pour faciliter le montage, le dispositif d'affichage 1 comprend en outre un joint de centrage 51 réalisé en un matériau élastomère thermoplastique polyester, par exemple celui commercialisé sous la marque HYTREL®.

Ce type de matériau présente l'avantage de la souplesse des caoutchoucs, la résistance des plastiques et la facilité de mise en oeuvre des thermoplastiques. Il existe avec une gamme très large de duretés SHORE (30D à 82D) tout en conservant ses propriétés dans une large gamme de températures comprise entre -40°C à +110°C.

Selon la figure 5, ce joint de centrage 51 est un simple anneau de section transversale sensiblement carrée.

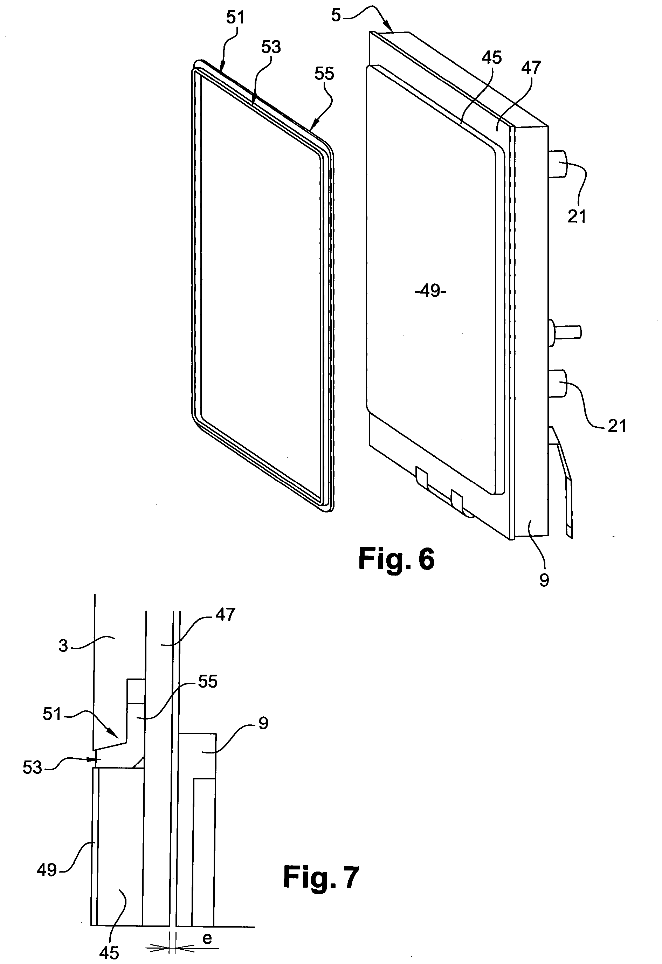

En alternative, ce joint de centrage 51 présente dans le mode de réalisation des figures 6 et 7 en coupe transversale un profil en L dont une branche 53 est en contact contre le bord de la plaque de comblement 45 et dont l'autre branche 55 est interposée entre la butée de référence 13 de la façade 3 et le sous-module 43. Le joint de centrage 51 peut être monté d'abord dans l'ouverture 15 de la façade 3 ou sur le sous-module 43.

Grâce à ses propriétés de matériau, le joint de centrage 51 qui possède une forme d'anneau peut être rectifié, ce qui lui procure des dimensions très précises et permet un placement très précis du sous-module 43 par rapport à l'ouverture 15.

De plus ce joint de centrage 51 permet une protection contre les décharges électrostatiques.

Comme on peut le constater sur les figures 5 et 7, l'épaisseur « e » de la lame d'air entre le sous-module 43 et l'écran d'affichage 7, c'est-à-dire l'interstice entre la dalle tactile 47 et l'écran d'affichage 7, peut être maitrisé avec précision, car on peut rattraper la dispersion des dimensions mécaniques des pièces et des tolérances de fabrication, en particulier du boîtier de fixation généralement réalisé en matière plastique.

Ainsi, dans le cadre d'un écran plat 7 simple avec une plaque de comblement 45, cela permet de minimiser des effets de réfraction qui pourraient altérer la qualité d'image, notamment lors de l'observation de l'écran 7 en oblique. Quand on pense que les écrans 7 sont généralement intégrés au niveau central d'un tableau de commande et d'affichage, on comprend qu'il s'agit d'un problème important qui est maintenant maîtrisé.

On comprend que le dispositif d'affichage 1 selon l'invention peut être intégré de façon à former pratiquement qu'une seule surface lisse pour l'utilisateur.

Bien entendu, d'autres modes de réalisations sont envisageables sans sortir du cadre de la présente invention.

En effet, les éléments de liaison 19 peuvent être utilisés avec un module d'affichage 5 plus simple, par exemple sans dalle tactile et/ou sans plaque de comblement et/ou sans film polariseur.

De même, le module d'affichage 5 avec un écran plat 7 sur lequel est collé le sous-module 43 présentant une plaque de comblement 45, une dalle tactile 47 avec ou sans film polariseur 49 peut trouver d'autres applications que les tableaux de commande et d'affichage de véhicules automobile et être fixé par d'autres moyens de fixation que les éléments de liaison 19 décrits ci-dessus. Il se distingue déjà en tant que tel par sa facilité d'assemblage.

Aussi le joint de centrage peut être utilisé avec d'autres éléments de liaison 19 que ceux décrits ci-dessus.

On va maintenant décrire plus en détail le procédé d'assemblage d'un dispositif d'affichage tel que décrit ci-dessus.

Sur la figure 8A est représentée une vue en coupe transversale semblable à celle de la figure 5.

Auparavant, le module d'affichage 5 avec son sous-module 43 et son écran d'affichage 7 avec le cadre de support 9 ont été assemblés et collés par un adhésif double face 50 contre la butée de référence 13 qui est ici la face interne de la façade 3.

De plus, les pieds de fixation 21 ont chacun été équipés d'un manchon élastique 29 maintenu en place par la vis de fixation 27 comme décrit ci-dessus.

Puis, on coiffe le module d'affichage 5 depuis l'arrière par le boîtier de fixation 11 et on fixe ce boîtier 11 par l'arrière par exemple à l'aide de vis 60 contre la façade 3.

A ce stade du procédé, le module d'affichage 5 est collé contre la façade 3 et centré grâce aux renfoncements tronconiques 23.

Puis, comme on le voit sur la figure 8B, un outil, comme par exemple un tournevis 62 est passé à travers l'ouverture de passage 25 pour serrer les vis 27 de sorte que chaque tête de vissage 35 appuie contre la partie tronconique 31 du manchon en élastomère 29 pour exercer une force de compression sur ce manchon en élastomère 29 de façon que la partie cylindrique 33 du manchon en élastomère 29 exerce une poussée axiale contre le cadre de support 9 tout en maintenant la partie cylindrique 33 du manchon 29 en appui par frottement par une poussée transversale contre le renfoncement tronconique 23, maintenant ainsi le module d'affichage 7 en appui contre la façade 3.

Ainsi, on met les éléments de liaison 19 en appui d'une part contre le boitier de fixation 11 et d'autre part contre le cadre de support 9 pour un rattrapage de jeu au moins partiel par l'arrière.

Sur les figures 9A et 9B, une alternative du procédé d'assemblage a été représentée.

Cette alternative se distingue essentiellement par le fait qu'au préalable, le sous-module 43 a été assemblé et collé par un adhésif double face 50 contre la butée de référence 13 qui est ici la face interne de la façade 3.

De plus, les pieds de fixation 21 de l'écran 7 ont chacun été équipés d'un manchon élastique 29 maintenu en place par la vis de fixation 27 comme décrit ci-dessus dans le boitier de fixation.

Puis, on coiffe le module d'affichage 5 avec l'écran 7 depuis l'arrière par le boîtier de fixation 11 et on fixe ce boîtier 11 par l'arrière par exemple à l'aide de vis 60 contre la façade 3.

Puis on procède au vissage des vis 27 ce qui va rapprocher, par le même mécanisme que décrit ci-dessus l'écran 7 du sous-module 43 jusqu'à venir en contact avec l'adhésif double face 50.

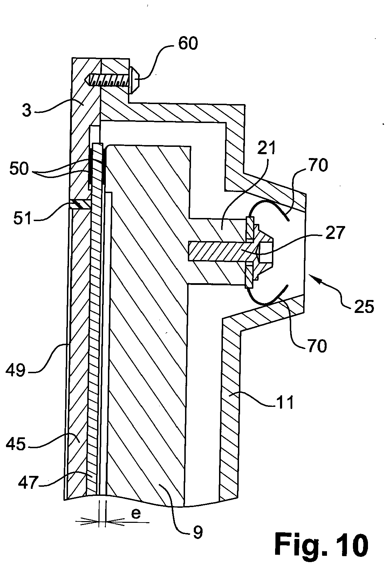

Sur la figure 10 est représentée une alternative des éléments élastiques comprimés 19. En effet, le mode de réalisation de la figure 10 se distingue de celui par exemple de la figure 8B par le fait que l'élément élastique 19 est formé par des lames ressorts 70 courbées, fixées par la vis 27 contre le pied de fixation 21 de l'écran 7. Pour l'assemblage, on peut procéder comme cela été décrit en relation avec les figures 8A et 8B à la différence près qu'en fixant le boîtier de fixation 11 par l'arrière contre la façade 3, on met automatiquement les éléments de liaison 19, c'est-à-dire ici les lames ressort courbées 70, en appui d'une part contre le boitier de fixation 11 et d'autre part contre le cadre de support 9 pour un rattrapage de jeu au moins partiel par l'arrière. Ainsi, un seul vissage est nécessaire pour fixer les lames ressort recourbées 70.

## Revendications

1. Dispositif d'affichage (1) pour véhicule automobile pour une façade (3) d'habitacle comportant
- d'une part un module d'affichage (5) comprenant
- un écran plat (7), et
- un cadre de support (9) dudit écran plat, et
- d'autre part un boîtier de fixation (11) par l'arrière du module d'affichage (5) contre une butée de référence (13) au niveau d'une zone d'affichage (15) de la façade (3), le cadre de support (9) de l'écran plat (7) étant
fixé sur le fond du boîtier de fixation (11) par l'intermédiaire d'éléments de liaison (19) qui sont chacun en appui d'une part contre le boitier de fixation (11) et d'autre part contre le cadre de support (9), **caractérisé en ce que** les éléments de liaison comprennent des éléments élastiques comprimés (19) pour maintenir le module d'affichage (5) en appui contre la butée de référence (13) de la façade (3).

2. Dispositif selon la revendication 1 dans lequel le cadre de support présente des pieds de fixation par vissage (21), **caractérisé en ce que** chaque élément de liaison (19) est maintenu par une vis (21) en prise avec un pied de fixation (21).

3. Dispositif selon la revendication 2, **caractérisé en ce que** l'élément de liaison (19) comprend un manchon en élastomère (29) entourant un pied de fixation (21).

4. Dispositif selon la revendication 3, **caractérisé en ce que**
- le boitier de fixation (11) comprend pour chaque élément de liaison (19) un renfoncement tronconique (23) présentant une ouverture (25) à l'arrière pour un passage d'une vis (27) et/ou d'un outil de vissage, et **en ce que**
- le manchon en élastomère (29) présente
∘ une partie tronconique (31) en appui contre le renfoncement tronconique (23) et
∘ une partie cylindrique (33) entourant un pied de fixation (21), et **en ce que**
- la vis (21) possède une tête de vissage (35) appuyant contre la partie tronconique (31) du manchon en élastomère (29) pour exercer une force de compression sur ce manchon en élastomère (29) de sorte que la partie cylindrique (33) du manchon en élastomère (29) exerce une poussée contre le cadre de support (9) tout en maintenant la partie cylindrique (33) du manchon (29) en appui par frottement contre le renfoncement tronconique (23), maintenant ainsi le module d'affichage (7) en appui contre la façade (3).

5. Dispositif selon la revendication 4, **caractérisé en ce qu'**il comporte en outre une rondelle (39) interposée entre la tête de vis (35) et la partie tronconique (31) du manchon en élastomère (29) et prolongée par une portion cylindrique (41) formant butée de vissage.

6. Dispositif selon l'une quelconque des revendications 4 à 5, **caractérisé en ce que** chaque pied de fixation (21) pénètre partiellement dans le renfoncement tronconique (23).

7. Dispositif selon l'une quelconque des revendications 1 à 6 dans laquelle la zone d'affichage est formée par une ouverture de façade (15) ménagée dans la façade (3), **caractérisé en ce que** le module d'affichage (5) comprend en outre un sous-module (43) présentant une plaque de comblement (45) en matériau transparent présentant sensiblement les dimensions de l'ouverture (15) ménagée dans la façade (3), le sous-module (43) étant fixé par collage contre le bord périphérique (9A) du cadre de support (9) destiné à être poussé en direction de la butée de référence (13) de la façade (3), l'épaisseur de ladite plaque de comblement (45) étant choisie de manière que la plaque de comblement (45) affleure la face de façade (3) destinée à être vue par un utilisateur avec un jeu inférieur à 0,2mm.

8. Dispositif selon la revendication 7, **caractérisé en ce que** le sous-module (43) comprend en outre une dalle tactile (47) collée contre la face (45A) de la plaque de comblement (45) opposée à celle (45B) destinée à être en vis-à-vis d'un utilisateur.

9. Dispositif selon l'une des revendications 7 à 8, **caractérisé en ce que** la plaque de comblement (45) possède une épaisseur comprise entre 1,6 et 2mm.

10. Dispositif selon l'une des revendications 7 à 9, **caractérisé en ce que** la plaque de comblement (45) est en verre.

11. Dispositif selon l'une des revendications 7 à 9, **caractérisé en ce que** la plaque de comblement (45) est en polycarbonate.

12. Dispositif selon l'une des revendications 8 à 11, **caractérisé en ce que** la dalle tactile (47) possède une épaisseur comprise entre 1,0 et 1,4 mm, de préférence 1,2mm.

13. Dispositif selon l'une quelconque des revendications 7 à 12, **caractérisé en ce que** le sous-module (43) comprend en outre un film polariseur (49) collé sur la face (45B) de la plaque de comblement (45) destinée à être en vis-à-vis d'un utilisateur.

14. Dispositif selon l'une des revendications 7 à 13, **caractérisé en ce qu'**il comprend en outre un joint de centrage (51) réalisé en un matériau élastomère thermoplastique polyester.

15. Dispositif selon la revendication 14, **caractérisé en ce que** le joint de centrage (51) présente en coupe transversal un profil en L dont une branche (53) est en contact contre le bord de la plaque de comblement (45) et dont l'autre branche (55) est interposée entre la butée de référence (13) de la façade (3) et le sous-module (43).

16. Dispositif selon la revendication 15, **caractérisé en ce que** le joint de centrage (51) est rectifiée.

17. Tableau de commande et d'affichage de véhicule automobile, **caractérisé en ce qu'**il comprend un dispositif d'affichage selon l'une quelconque des revendications 1 à 16.

18. Procédé d'assemblage d'un dispositif d'affichage selon l'une quelconque des revendications 1 à 16, **caractérisé en ce que**
- on fixe le boîtier de fixation (11) par l'arrière contre la façade (3) et
- on met les éléments de liaison en appui d'une part contre le boitier de fixation (11) et d'autre part contre le cadre de support (9) pour un rattrapage de jeu au moins partiel par l'arrière.

19. Procédé d'assemblage selon la revendication 18, **caractérisé en ce que** l'on fixe au préalable le sous-module (13) par collage contre la butée (13) de référence.

20. Procédé selon la revendication 18, **caractérisé en ce que** l'on fixe au préalable le module d'affichage (5) par collage contre la butée (13) de référence.

21. Procédé d'assemblage selon l'une quelconque des revendications 18 à 20, pour un dispositif d'affichage selon la revendication 5, **caractérisé en ce que** l'on serre les vis (21) de sorte que chaque tête de vissage (35) appuie contre la partie tronconique (31) du manchon en élastomère (29) pour exercer une force de compression sur ce manchon en élastomère (29) de façon que la partie cylindrique (33) du manchon en élastomère (29) exerce une poussée axiale contre le cadre de support (9) tout en maintenant la partie cylindrique (33) du manchon (29) en appui par frottement par une poussée transversale contre le renfoncement tronconique (23), maintenant ainsi le module d'affichage (7) en appui contre la façade (3).

## Patentansprüche

1. Anzeigevorrichtung (1) für ein Kraftfahrzeug für eine Frontblende (3) des Fahrgastraums, aufweisend
- zum einen ein Anzeigemodul (5), umfassend
- einen Flachbildschirm (7) und
- einen Halterahmen (9) für den Flachbildschirm und
- zum anderen ein Befestigungsgehäuse (11) zum Befestigen des Anzeigemoduls (5) von hinten gegen einen Referenzanschlag (13) auf Höhe eines Anzeigebereichs (15) der Frontblende (3), wobei der Halterahmen (9) des Flachbildschirms (7) an der Rückwand des Befestigungsgehäuses (11) über Verbindungselemente (19) befestigt ist, die jeweils zum einen am Befestigungsgehäuse (11) und zum anderen am Halterahmen (9) anliegen, **dadurch gekennzeichnet, dass** die Verbindungselemente zusammengepresste elastische Elemente (19) umfassen, um das Anzeigemodul (5) in Anlage am Referenzanschlag (13) der Frontblende (3) zu halten.

2. Vorrichtung nach Anspruch 1, wobei der Halterahmen Schraubbefestigungsfüße (21) aufweist, **dadurch gekennzeichnet, dass** jedes Verbindungselement (19) von einer Schraube (21) gehalten wird, die mit einem Befestigungsfuß (21) in Eingriff ist.

3. Vorrichtung nach Anspruch 2, **dadurch gekennzeichnet, dass** das Verbindungselement (19) eine Hülse aus Elastomer (29) umfasst, die einen Befestigungsfuß (21) umgibt.

4. Vorrichtung nach Anspruch 3, **dadurch gekennzeichnet, dass**
- das Befestigungsgehäuse (11) für jedes Verbindungselement (19) eine kegelstumpfartige Vertiefung (23) umfasst, die auf der Rückseite eine Öffnung (25) zum Durchführen einer Schraube (27) und/oder eines Schraubwerkzeugs aufweist, und dadurch, dass
- die Hülse aus Elastomer (29) aufweist
∘ einen kegelstumpfförmigen Teil (31), der in Anlage an der kegelstumpfförmigen Vertiefung (23) ist, und
∘ einen zylindrischen Teil (33), der einen Befestigungsfuß (21) umgibt, und dadurch, dass
- die Schraube (21) einen Schraubenkopf (35) besitzt, der am kegelstumpfförmigen Teil (31) der Hülse aus Elastomer (29) anliegt, um eine Presskraft auf diese Hülse aus Elastomer (29) auszuüben, so dass der zylindrische Teil (33) der Hülse aus Elastomer (29) einen Druck gegen den Halterahmen (9) ausübt und dabei den zylindrischen Teil (33) der Hülse (29) durch Reibung an der kegelstumpfförmigen Vertiefung (23) in Anlage hält und so das Anzeigemodul (7) in Anlage an der Frontblende (3) hält.

5. Vorrichtung nach Anspruch 4, **dadurch gekennzeichnet, dass** sie ferner eine Unterlegscheibe (39) umfasst, die zwischen dem Schraubenkopf (35) und dem kegelstumpfförmigen Teil (31) der Hülse aus Elastomer (29) angeordnet ist und durch einen zylindrischen Abschnitt (41), der einen Schraubanschlag bildet, verlängert wird.

6. Vorrichtung nach einem der Ansprüche 4 bis 5, **dadurch gekennzeichnet, dass** jeder Befestigungsfuß (21) teilweise in die kegelstumpfförmige Vertiefung (23) eindringt.

7. Vorrichtung nach einem der Ansprüche 1 bis 6, bei welcher der Anzeigebereich durch eine Frontblendenöffnung (15) gebildet wird, die in der Frontblende (3) ausgebildet ist, **dadurch gekennzeichnet, dass** das Anzeigemodul (5) ferner ein Submodul (43) umfasst, das eine Füllscheibe (45) aus transparentem Material aufweist, die im Wesentlichen die Abmessungen der in der Frontblende (3) ausgebildeten Öffnung (15) aufweist, wobei das Submodul (43) durch Kleben am Umfangsrand (9A) des Halterahmens (9) befestigt wird, der dazu bestimmt ist, in Richtung des Referenzanschlags (13) der Frontblende (3) gedrückt zu werden, wobei die Dicke der Füllscheibe (45) so gewählt ist, dass die Füllscheibe (45) bündig mit der Seite der Frontblende (3) ist, die dazu bestimmt ist, von einem Benutzer gesehen zu werden, mit einem Spiel von weniger als 0,2 mm.

8. Vorrichtung nach Anspruch 7, **dadurch gekennzeichnet, dass** das Submodul (43) ferner eine berührungsempfindliche Platte (47) umfasst, die an die Seite (45A) der Füllscheibe (45) geklebt ist, die entgegengesetzt zu derjenigen (45B) ist, die dazu bestimmt ist, dem Benutzer zugewandt zu sein.

9. Vorrichtung nach einem der Ansprüche 7 bis 8, **dadurch gekennzeichnet, dass** die Füllscheibe (45) eine Dicke zwischen 1,6 und 2 mm aufweist.

10. Vorrichtung nach einem der Ansprüche 7 bis 9, **dadurch gekennzeichnet, dass** die Füllscheibe (45) aus Glas ist.

11. Vorrichtung nach einem der Ansprüche 7 bis 9, **dadurch gekennzeichnet, dass** die Füllscheibe (45) aus Polycarbonat ist.

12. Vorrichtung nach einem der Ansprüche 8 bis 11, **dadurch gekennzeichnet, dass** die berührungsempfindliche Platte (47) eine Dicke zwischen 1,0 und 1,4 mm, bevorzugt 1,2 mm aufweist.

13. Vorrichtung nach einem der Ansprüche 7 bis 12, **dadurch gekennzeichnet, dass** das Submodul (43) ferner eine polarisierende Folie (49) umfasst, die auf die Seite (45B) der Füllscheibe (45) geklebt ist, die dazu bestimmt ist, einem Benutzer zugewandt zu sein.

14. Vorrichtung nach einem der Ansprüche 7 bis 13, **dadurch gekennzeichnet, dass** sie ferner eine Zentrierdichtung (51) umfasst, die aus einem thermoplastischen Polyester-Elastomermaterial ausgeführt ist.

15. Vorrichtung nach Anspruch 14, **dadurch gekennzeichnet, dass** die Zentrierdichtung (51) im Querschnitt ein L-Profil aufweist, dessen einer Schenkel (53) den Rand der Füllscheibe (45) kontaktiert und dessen anderer Schenkel (55) zwischen dem Referenzanschlag (13) der Frontblende (3) und dem Submodul (43) angeordnet ist.

16. Vorrichtung nach Anspruch 15, **dadurch gekennzeichnet, dass** die Zentrierdichtung (51) feingeschliffen ist.

17. Bedien- und Anzeigefeld für ein Kraftfahrzeug, **dadurch gekennzeichnet, dass** es eine Anzeigevorrichtung nach einem der Ansprüche 1 bis 16 umfasst.

18. Verfahren zur Montage einer Anzeigevorrichtung nach einem der Ansprüche 1 bis 16, **dadurch gekennzeichnet dass**
- man das Befestigungsgehäuse (11) von hinten an der Frontblende (3) befestigt und
- man die Verbindungselemente zum einen am Befestigungsgehäuse (11) und zum anderen am Halterahmen (9) in Anlage bringt, zum zumindest teilweisen Ausgleichen des Spiels von hinten.

19. Montageverfahren nach Anspruch 18, **dadurch gekennzeichnet, dass** man zuvor das Submodul (13) durch Kleben am Referenzanschlag (13) befestigt.

20. Verfahren nach Anspruch 18, **dadurch gekennzeichnet, dass** man zuvor das Anzeigemodul (5) durch Kleben am Referenzanschlag (13) befestigt.

21. Montageverfahren nach einem der Ansprüche 18 bis 20 für eine Anzeigevorrichtung nach Anspruch 5, **dadurch gekennzeichnet, dass** man die Schrauben (21) so anzieht, dass jeder Schraubenkopf (35) am kegelstumpfförmigen Teil (31) der Hülse aus Elastomer (29) anliegt, um eine Presskraft auf diese Hülse aus Elastomer (29) auszuüben, so dass der zylindrische Teil (33) der Hülse aus Elastomer (29) einen axialen Druck gegen den Halterahmen (9) ausübt und dabei den zylindrischen Teil (33) der Hülse (29) durch Reibung durch einen Querdruck in Anlage an der kegelstumpfförmigen Vertiefung (23) hält und so das Anzeigemodul (7) in Anlage an der Frontblende (3) hält.

## Claims

1. Motor vehicle display device (1) for the fascia (3) of a passenger compartment, comprising:
- on the one hand, a display module (5) comprising
- a flat screen (7), and
- a frame (9) for supporting said flat screen, and
- on the other hand, a housing (11) for the rear attachment of the display module (5) against a reference stop (13) in a display area (15) of the fascia (3),
the frame (9) for supporting the flat screen (7) being attached to the base of the attachment housing (11) by means of connecting elements (19), each of which bears, on the one hand, against the attachment housing (11) and, on the other hand, against the support frame (9), **characterized in that** the connecting elements comprise compressed resilient elements (19) to keep the display module (5) bearing against the reference stop (13) of the fascia (3).

2. Device according to Claim 1, wherein the support frame has feet for attachment by screwing (21), **characterized in that** each connecting element (19) is held by a screw (21) in engagement with an attachment foot (21).

3. Device according to Claim 2, **characterized in that** the connecting element (19) comprises an elastomeric bush (29) surrounding an attachment foot (21).

4. Device according to Claim 3, **characterized in that**:
- the attachment housing (11) comprises, for each connecting element (19), a frustoconical recess (23) having an opening (25) at the rear for the passage of a screw (27) and/or of a screwing tool, and **in that**
- the elastomeric bush (29) has
∘ a frustoconical part (31) bearing against the frustoconical recess (23) and
∘ a cylindrical part (33) surrounding an attachment foot (21), and **in that**
- the screw (21) has a screwing head (35) bearing against the frustoconical part (31) of the elastomeric bush (29) to exert a compressive force on this elastomeric bush (29) so that the cylindrical part (33) of the elastomeric bush (29) exerts a thrust against the support frame (9) while keeping the cylindrical part (33) of the bush (29) bearing by friction against the frustoconical recess (23), thereby keeping the display module (7) bearing against the fascia (3).

5. Device according to Claim 4, **characterized in that** it further comprises a washer (39) is interposed between the screw head (35) and the frustoconical part (31) of the elastomeric bush (29) and is extended by a cylindrical portion (41) forming a screwing stop.

6. Device according to either of Claims 4 and 5, **characterized in that** each attachment foot (21) penetrates partially into the frustoconical recess (23) .

7. Device according to any of Claims 1 to 6, wherein the display area is formed by a fascia opening (15) provided in the fascia (3), **characterized in that** the display module (5) further comprises a sub-module (43) having a cover plate (45) of transparent material having substantially the same dimensions as the opening (15) formed in the fascia (3), the sub-module (43) being attached by gluing to the peripheral edge (9A) of the support frame (9) intended to be pushed toward the reference stop (13) of the fascia (3), the thickness of said cover plate (45) being selected so that the cover plate (45) is flush with the surface of the fascia (3) intended to be viewed by a user, with a play of less than 0.2 mm.

8. Device according to Claim 7, **characterized in that** the sub-module (43) also comprises a touch pad (47) glued onto the surface (45A) of the cover plate (45) opposite the surface (45B) intended to face a user.

9. Device according to either of Claims 7 and 8, **characterized in that** the cover plate (45) has a thickness in the range from 1.6 to 2 mm.

10. Device according to any of Claims 7 to 9, **characterized in that** the cover plate (45) is made of glass.

11. Device according to any of Claims 7 to 9, **characterized in that** the cover plate (45) is made of polycarbonate.

12. Device according to any of Claims 8 to 11, **characterized in that** the touch pad (47) has a thickness in the range from 1.0 to 1.4 mm, preferably 1.2 mm.

13. Device according to any of Claims 7 to 12, **characterized in that** the sub-module (43) also comprises a polarizing film (49) glued onto the surface (45B) of the cover plate (45) intended to face a user.

14. Device according to any of Claims 7 to 13, **characterized in that** it further comprises a centering gasket (51) made of a polyester thermoplastic elastomeric material.

15. Device according to Claim 14, **characterized in that** the centering gasket (51) has an L-shaped profile in cross section, one branch (53) of which is in contact with the edge of the cover plate (45) while its other branch (55) is interposed between the reference stop (13) of the fascia (3) and the sub-module (43).

16. Device according to Claim 15, **characterized in that** the centering gasket (51) is trimmed.

17. Motor vehicle control and display panel, **characterized in that** it comprises a display device according to any of Claims 1 to 16.

18. Method for assembling a display device according to any of Claims 1 to 16, **characterized in that**
- the attachment housing (11) is attached by its rear against the fascia (3), and
- the connecting elements are made to bear, on the one hand, against the attachment housing (11), and, on the other hand, against the support frame (9), in order to take up at least some of the play at the rear.

19. Assembly method according to Claim 18, **characterized in that** the sub-module (13) is attached in advance by gluing to the reference stop (13).

20. Method according to Claim 18, **characterized in that** the display module (5) is attached in advance by gluing to the reference stop (13).

21. Assembly method according to any of Claims 18 to 20, for a display device according to Claim 5, **characterized in that** the screws (21) are tightened so that each screwing head (35) bears against the frustoconical part (31) of the elastomeric bush (29) to exert a compressive force on this elastomeric bush (29) so that the cylindrical part (33) of the elastomeric bush (29) exerts an axial thrust against the support frame (9) while keeping the cylindrical part (33) of the bush (29) bearing by friction by a transverse thrust against the frustoconical recess (23), thereby keeping the display module (7) bearing against the fascia (3).
